# EUROPÄISCHE PATENTANMELDUNG

(11) **EP 4 403 953 A1**
(43) Veröffentlichungstag der Anmeldung: **24.07.2024**
(21) Anmeldenummer: 23152274.9
(22) Anmeldetag: 18.01.2023
(51) Int. Cl.: G01S 7/481, G01S 17/08

(54) **OPTISCHER SENSOR ZUR STÖRUNGSARMEN LAUFZEITMESSUNG VON ELEKTROMAGNETISCHEN STRAHLEN**

(71) Anmelder: dormakaba EAD GmbH, 78056 Villingen-Schwenningen (DE)
(72) Erfinder: Martin, Ruof, Villingen-Schwenningen (DE)
(74) Vertreter: Balder IP Law, S.L.

(57) **Zusammenfassung**

Die Erfindung betrifft eine einen optischen Sensor (12) mit einem Prisma (32), das zwischen einem Detektor (28) des Sensors (12) und einer Abdeckung (18) positioniert ist. Eine von dem Prisma (32) ausgehend nach außen gerichtete Flächennormale einer ersten Prismenflanke (34a) des Prismas (32) weist in Richtung des Detektors (28). Eine von dem Prisma (32) ausgehend nach außen gerichtete Flächennormale einer zweiten Prismenflanke (34b) des Prismas (32) weist in Richtung der Abdeckung (18). Schenkel eines Prismenwinkels (α) erstrecken sich an der ersten und der zweiten Prismenflanke (34a), (34b) entlang. Eine erste Sensorachse (30a) verläuft in einer Richtung durch den Detektor (28) und die Abdeckung (18), wobei die erste Sensorachse (30a) orthogonal zu der Abdeckung (18) ausgerichtet ist. Eine zweite Sensorachse (30b) steht orthogonal zu der ersten Sensorachse (30a), wobei die Abdeckung (18) sich insbesondere mit ihrer längsten Ausdehnung entlang der zweiten Sensorachse (30b) erstreckt. Die erste Prismenflanke (34a) ist gegen die zweite Sensorachse (30b) mit einem Kippwinkel (κs) schräg orientiert. Die Abdeckung (18) transmittiert wenigstens einen Teil von elektromagnetischen Strahlen (16), die von einem Sender (14) des Sensors (12) emittiert werden. Der Detektor (28) ist zum Detektieren der von dem Sender (14) emittierten Strahlen (16) ausgebildet. Der Kippwinkel (κs) und der Prismenwinkel (α) weisen derartige Winkelgrößen auf, dass Störstrahlen (24a - 24d) wenigstens teilweise an dem Detektor (28) vorbei propagieren, wobei die Störstrahlen (24a - 24 d) durch Reflexion von aus dem Sender (14) emittierten Strahlen (16) an der Abdeckung (18) erzeugt werden,.

## Beschreibung

### Hintergrund der Erfindung

Die Erfindung betrifft einen optischen Sensor zur störungsarmen Laufzeitmessung von reflektierten elektromagnetischen Strahlen. Die Erfindung betrifft weiterhin ein Sensorsystem mit einem solchen Sensor. Ferner betrifft die Erfindung eine elektronische Interaktionsvorrichtung mit einem solchen Sensorsystem. Darüber hinaus betrifft die Erfindung eine Verwendung von optischen Elementen zum Betrieb eines solchen Sensors und ein Verfahren zur Montage eines solchen Sensors.

Aus dem Stand der Technik sind optische Sensoren zur Abstandsmessung von Objekten durch Laufzeitmessungen bekannt, bei denen Sender elektromagnetische Strahlen emittieren, die an den Objekten reflektiert werden und von Detektoren der Sensoren erfasst werden. Einige der emittierten Strahlen werden dabei typischerweise an Abdeckfenstern der Sensoren reflektiert und strahlen in die Detektoren, ohne die Sensoren zu verlassen. Dadurch werden Laufzeitmessungen der an den Objekten reflektierten Strahlen verfälscht oder vollständig verhindert. Um ein derartiges Übersprechen des betreffenden Detektors zu vermindern, ist es weiter aus dem Stand der Technik bekannt, zwischen dem Detektor und der Abdeckung ein Abschirmelement anzuordnen, das die von der Abdeckung reflektierten Strahlen blockiert.

Allerdings kann der Detektor durch das Abschirmelement nur von einem Teil der an der Abdeckung reflektierten Strahlung abgeschirmt werden. Weiterhin schränkt ein Abschirmelement durch die absorbierende Wirkung den Emissionswinkel der aus dem Sender emittierten Strahlen ein.

### Aufgabe der Erfindung

Es ist daher Aufgabe der Erfindung, einen verbesserten optischen Sensor zur Laufzeitmessung von elektromagnetischen Strahlen bereitzustellen. Es ist weiter Aufgabe der Erfindung, ein Sensorsystem und eine elektronische Interaktionsvorrichtung mit einem solchen Sensor bereitzustellen. Darüber hinaus ist es Aufgabe der Erfindung, ein Verfahren zur Verwendung von optischen Elementen zum Betrieb eines solchen Sensors und ein Verfahren zur Montage eines solchen Sensors anzugeben.

### Beschreibung der Erfindung

Diese Aufgabe wird erfindungsgemäß gelöst durch einen optischen Sensor gemäß Anspruch 1. Ein erfindungsgemäßes Sensorsystem weist die Merkmale gemäß Anspruch 16 auf. Eine erfindungsgemäße elektronische Interaktionsvorrichtung ist mit den Merkmalen gemäß Anspruch 19 ausgebildet. Ein erfindungsgemäßes Verfahren zur Verwendung von optischen Elementen zum Betrieb des Sensors weist die in Anspruch 20 angegebenen Schritte auf. Ein erfindungsgemäßes Verfahren zur Montage des Sensors erfolgt gemäß den in Anspruch 21 genannten Schritten. Vorteilhafte Ausgestaltungen ergeben sich aus den rückbezogenen Unteransprüchen.

Der optische Sensor zur störungsarmen Laufzeitmessung von reflektierten elektromagnetischen Strahlen weist die folgenden Elemente auf:
- Einen Sender zum Senden der elektromagnetischen Strahlen durch eine Abdeckung, wobei die Abdeckung für wenigstens einen Teil der von dem Sender emittierten Strahlen durchlässig ist;
- Einen Detektor zum Detektieren der elektromagnetischen Strahlen;
- Eine erste Sensorachse, die in einer Richtung von dem Detektor zu der Abdeckung verläuft, wobei die erste Sensorachse orthogonal auf der Abdeckung steht;
- Eine zweite Sensorachse, die orthogonal zu der ersten Sensorachse steht;

wobei zwischen dem Detektor und der Abdeckung ein Prisma angeordnet ist, wobei das Prisma eine dem Detektor zugewandte erste Prismenflanke aufweist, wobei die erste Prismenflanke in Bezug auf die zweite Sensorachse mit einem Kippwinkel geneigt ist,
wobei das Prisma eine an die erste Prismenflanke angrenzende zweite Prismenflanke aufweist, die der Abdeckung zugewandt ist, wobei zwischen der ersten Prismenflanke und der zweiten Prismenflanke ein Prismenwinkel ausgebildet ist,
wobei eine dritte Prismenflanke an die erste Prismenflanke und die zweite Prismenflanke angrenzt,
wobei der Prismenwinkel und der Kippwinkel derart ausgebildet sind, dass Störstrahlen wenigstens teilweise mittels des Prismas an dem Detektor vorbeigelenkt werden, wobei die Störstrahlen erzeugt werden, indem elektromagnetische Strahlen von dem Sender in Richtung der Abdeckung ausgesendet werden und an dem Prisma und/oder der Abdeckung reflektiert werden.

Der Sensor dient dem Detektieren von Objekten unter Verwendung von elektromagnetischen Strahlen, die von dem Sender emittiert werden und an Objekten außerhalb des Sensors zu dem Detektor reflektiert werden. Solche Strahlen werden im Rahmen der Anmeldung auch als Nutzstrahlen bezeichnet. Insbesondere spalten sich auf die Abdeckung einfallende elektromagnetische Strahlen in die Nutzstrahlen und Störstrahlen auf. Dabei bildet ein durch die Abdeckung transmittierter Anteil der auf die Abdeckung einfallenden elektromagnetischen Strahlen die Nutzstrahlen aus, wohingegen ein durch die Abdeckung reflektierter Anteil Störstrahlen darstellt. Die Störstrahlen sind insbesondere elektromagnetische Strahlen, die aus den von dem Sender emittierten Strahlen durch Reflexion an der Abdeckung und/oder dem Prisma erzeugt werden und nach dieser Reflexion zu dem Detektor hin gerichtet sind. Insbesondere sind Störstrahlen elektromagnetische Strahlen, die die Funktionalität des Detektors beeinträchtigen. Die Nutzstrahlen sind insbesondere elektromagnetische Strahlen, die aus von dem Sender emittierten Strahlen durch Transmission durch die Abdeckung erzeugt werden und dabei von dem Sensor aus gesehen nach außen gerichtet sind. Insbesondere wird an dem Detektor ein derartiger Anteil an Störstrahlen vorbeigelenkt, dass ein Rauschsignal oder Störsignal in dem Detektor unter einem erwünschten Schwellwert bleibt. Bevorzugt wird ein Anteil von 50%, 60%, 70%, 80%, 90% oder 95% der Störstrahlen an dem Detektor vorbeigelenkt.

Das Prisma verhindert vorteilhaft, dass die Nutzstrahlen von Störstrahlen überlagert werden, die von der Abdeckung ausgehend in Richtung des Detektors propagieren. Dies geschieht insbesondere durch eine Totalreflexion der Störstrahlen an der ersten Prismenflanke, nachdem sie von der Abdeckung reflektiert wurden. Dadurch wird ein Übersprechen der zu detektierenden Signale vermindert oder vollständig verhindert. Mit anderen Worten wird ein Rauschen oder eine Störung von durch die Nutzstrahlen erzeugten Signalen stark reduziert. Das Prisma ist insbesondere an einer Seite der Abdeckung angeordnet, die dem Detektor und/oder dem Sender zugewandt ist. Unter einer Seite der Abdeckung, die dem Detektor und/oder dem Sender zugewandt ist, wird insbesondere eine Seite der Abdeckung mit einer von der Abdeckung aus gesehen nach außen gerichteten Flächennormalen verstanden, die in Richtung des Detektors und/oder des Senders gerichtet ist. Bevorzugt weist das Prisma Klebeflächen und/oder Klebepads zum Ankleben an der Abdeckung auf.

Insbesondere weist eine von dem Prisma aus gesehen nach außen gerichtete Flächennormale der ersten Prismenflanke zu dem Detektor und/oder dem Sender. Bevorzugt weist eine von dem Prisma aus gesehen nach außen gerichtete Flächennormale der zweiten Prismenflanke zu der Abdeckung. Vorzugsweise weist die erste Prismenflanke einen geringeren Abstand zu dem Detektor auf als die zweite Prismenflanke. Bevorzugt weist die zweite Prismenflanke einen geringeren Abstand zu der Abdeckung auf als die erste Prismenflanke.

Der Sensor hat insbesondere den Zweck, eine sich dem Sensor nähernde Person zu erkennen und/oder einen sich dem Sensor nähernden Finger einer Person zu erkennen, um einen Fingerabdruck-Sensor (aus einem Schlafmodus) zu aktivieren, der die betreffende Person anhand eines Musters der Fingerkupe des Fingers identifiziert. Der Sensor kann Klebepads und/oder Halteflächen für Klebepads zum Anbringen des Sensors an Halteelementen aufweisen. Bevorzugt weist der Sensor einen Array von 8 × 8 Pixeln auf.

Die erste Sensorachse weist insbesondere in die horizontale Richtung, die zweite Sensorachse bevorzugt in die vertikale Richtung. Der Detektor ist bevorzugt auf einer vertikal orientierten Leiterplatte gelötet.

Das Prisma ist bei einer vorteilhaften Ausgestaltung des Sensors in Richtung der ersten Sensorachse zwischen dem Detektor, dem Sender und der Abdeckung angeordnet, wobei die erste Prismenflanke auch dem Sender zugewandt ist. Dadurch wird verhindert, dass von dem Sender ausgesendete Strahlen in den Sender zurückreflektiert werden.

Die dritte Prismenflanke weist bei einer bevorzugten Ausführungsform des Sensors eine vorbestimmte Rauheit auf, um Reflexionen von elektromagnetischen Strahlung an der dritten Prismenflanke zu verringern. Dabei ist die dritte Prismenflanke bevorzugt derart orientiert, dass eine Mittellinie durch die dritte Prismenflanke parallel zu der ersten Sensorachse verläuft. Durch das Aufrauen der dritten Prismenflanke können Reflexionen von elektromagnetischer Strahlung an der dritten Prismenflanke innerhalb des Prismas stark vermindert werden, um Störsignale durch mehrfach reflektierte elektromagnetische Strahlen zu verhindern. Die Mittellinie ergibt sich insbesondere als eine Ausgleichsgerade von Messwerten zur Bestimmung des Rauheitsprofils der dritten Prismenflanke in einer vorgegebenen Richtung.

Der Sender ist bei einer vorteilhaften Variante des Sensors dazu eingerichtet, elektromagnetische Strahlen in einer ersten Strahlebene, die durch die erste Sensorachse und die zweite Sensorachse festgelegt ist, mit einem ersten Divergenzwinkel DW1 mit 40° ≤ DW1 ≤ 50° auszusenden, bevorzugt DW1=45°, wobei die erste Sensorachse durch den Scheitelpunkt des ersten Divergenzwinkels und zwischen den Schenkeln des ersten Divergenzwinkels verläuft, wobei die erste Sensorachse insbesondere eine Winkelhalbierende des ersten Divergenzwinkels bildet. Bei diesem ersten Divergenzwinkel weist die von dem Sensor emittierte elektromagnetische Strahlung in der ersten Strahlebene einen vergleichsweise großen Detektionsbereich bei vergleichsweise gleichmäßiger Strahlungsdichte auf, um Objekte im Außenbereich des Sensors zuverlässig zu detektieren.

Der Detektor ist bevorzugt dazu eingerichtet, elektromagnetische Strahlen in der ersten Strahlebene in einem Empfangswinkel EW mit 40° ≤ EW ≤ 50° zu empfangen, bevorzugt EW=45°, wobei die erste Sensorachse durch den Scheitelpunkt des Empfangswinkels und zwischen den Schenkeln des Empfangswinkels verläuft, wobei die erste Sensorachse insbesondere eine Winkelhalbierende des Empfangswinkels bildet.

Bei einer Weiterentwicklung der vorgenannten Variante ist der Sender dazu eingerichtet, elektromagnetische Strahlung in einer zweiten Strahlebene, die orthogonal zu der ersten Strahlebene steht, mit einem zweiten Divergenzwinkel DW2 mit 40° ≤ DW2 ≤ 50°, bevorzugt DW2= 45°, auszusenden, wobei die erste Sensorachse durch die zweite Strahlebene verläuft. Hierdurch kann ein vergleichsweise großer Raumwinkel außerhalb des Sensors durch die Strahlen aus dem Sender beleuchtet werden, wobei die Strahlungsdichte der elektromagnetischen Strahlung eine vergleichsweise hohe Homogenität aufweisen. Die Divergenzwinkel DW1 und DW2 legen insbesondere zusammen das Sichtfeld (field-of-view) des optischen Sensors fest.

Das Prisma ist bei einer vorteilhaften Ausgestaltung des Sensors dazu eingerichtet, die von dem Sender emittierten Strahlen in eine Bestrahlungsrichtung zu brechen, die eine erste Richtungskomponente parallel zu der zweiten Sensorachse aufweist, wobei die erste Richtungskomponente von einer Prismenkante, die der dritten Prismenflanke gegenüberliegt, zu der dritten Prismenflanke gerichtet ist, wobei eine zweite Richtungskomponente der Bestrahlungsrichtung parallel zu der ersten Sensorachse gerichtet ist. Die Strahlen werden beim Austritt aus dem Sensor in Richtung der ersten Richtungskomponente weggelenkt, um verschiedene Objekte, insbesondere Reflektoren, die entlang der zweiten Sensorachse zueinander versetzt sind, gleichzeitig zu erfassen. Dies betrifft insbesondere den Fall, dass sich einer oder mehrere Reflektoren entlang der zweiten Sensorachse unterhalb des Prismas und/oder der Abdeckung befinden. Die Reflektoren sind zum Beispiel eine Person und ein sich dem Sensor nähernder Finger oder eine Identifikationskarte zur Identifikation einer Person.

Das Prisma ist bei bevorzugten Ausgestaltungen des Sensors dazu eingerichtet, die von dem Sender emittierten Strahlen derart zu brechen, dass aus den emittierten Strahlen abgezweigte Nutzstrahlen nach dem Austreten aus der Abdeckung in der ersten Strahlebene einen dritten Divergenzwinkel DW3 aufweisen, dessen Winkelgröße mit der Winkelgröße des ersten Divergenzwinkels DW1 übereinstimmt. Dadurch wird einerseits eine Bündelung der Strahlen verhindert, die zu einer Beschädigung von Objekten außerhalb des Sensors führen können. Andererseits wird bei einem solchen Divergenzwinkel DW3 die Sendeleistung bzw. Strahlungsleistung der elektromagnetischen Strahlung außerhalb des Sensors durch den Einfluss des Prismas nicht oder nur vergleichsweise wenig gesenkt. Daher wird die Reichweite, in der der Sensor Objekte, insbesondere Personen, detektierten kann, durch das Prisma nicht verringert.

Bei einer vorteilhaften Variante des Sensors gilt für den Kippwinkel εcs: 30° ≤ κs ≤ 40° , insbesondere εcs = 37°, und/oder für den Prismenwinkel α: 40° ≤ α ≤ 50°, insbesondere α = 45°. Bei diesen Winkelgrößen wird ein Übersprechen der zu detektierenden Signale stark vermindert, inbesondere wenn die elektromagnetischen Strahlen mit den vorgenannten Winkelgrößen des ersten und zweiten Divergenzwinkels von dem Sender emittiert werden. Bei einem Kippwinkel εcs = 37° und einem Prismenwinkel α = 45° wird der Raumwinkel, in den die Nutzstrahlen einstrahlen, vergleichsweise wenig durch das Prisma verschoben. Dadurch können sich nähernde Personen, insbesondere die Körper solcher Personen, vorzugsweise deren Gesichter (z.B. bei vertikaler Ausrichtung der zweiten Sensorachse), vergleichsweise leicht durch den Sensor erkannt werden. Die zweite Prismenflanke ist bei dieser Variante des Sensors derart gegen die Abdeckung geneigt, dass der Abstand zwischen der Abdeckung und der zweiten Prismenflanke in der Richtung von der vorgenannten Prismenkante zu der dritten Prismenflanke abnimmt. Die dadurch verursachten Totalreflexionen von an der Abdeckung reflektierten Störstrahlen an der zweiten Prismenflanke verhindern maßgeblich ein Einstrahlen der Störstrahlen in den Detektor.

Bei Weiterentwicklungen der vorgenannten Variante des Sensors ist die Größe des Kippwinkels εcs und die Größe des Prismenwinkels α durch eines der folgenden Wertepaare (α, εcs) gegeben:
(α = 43°, εcs = 34,9° ±0.6°),
(α = 44°, εcs = 35,8° ±0.6°),
(α = 45°, εcs = 36,7° ±0.5°),
(α = 46°, εcs = 37,6° ±0.5°) oder
(α = 47°, εcs = 38,5° ±0.5°),
insbesondere
(α = 43°, εcs = 34,9°), (α = 43°, εcs = 35°),
(α = 44°, εcs = 35,8°), (α = 44°, = 36°),
(α = 45°, εcs = 36,7°), (α = 45°, εcs = 37°),
(α = 46°, εcs = 37,6°), (α = 46°, εcs = 38°),
(α = 47°, εcs = 38,5°), (α = 47°, εcs = 39°),
(α = 48°, εcs = 39,5°) oder (α = 48°, εcs = 40°).

Bei diesen Winkelgrößen wird ein Übersprechen der zu detektierenden Signale verhindert. Dabei ändern sich die Divergenzwinkel der Strahlen, die aus den dem Sensor austreten nicht oder nur wenig gegenüber den Divergenzwinkeln der Strahlen, die von dem Sender emittiert werden, sodass das Sichtfeld des Sensors weder aufgefächert noch verkleinert wird.

Der Sender und der Detektor sind bei vorteilhaften Ausgestaltungen des Sensors in einer Richtung parallel zu einer dritten Sensorachse nebeneinander angeordnet, wobei die dritte Sensorachse orthogonal zu der ersten Sensorachse und der zweiten Sensorachse verläuft, wobei insbesondere der Sender dazu ausgerichtet ist, elektromagnetische Strahlen mit einer Strahlrichtung, die eine Richtungskomponente senkrecht zu der dritten Sensorachse aufweist, zu emittieren und der Detektor dazu ausgerichtet ist, elektromagnetische Strahlen mit einer Strahlrichtung, die eine Richtungskomponente senkrecht zu der dritten Sensorachse aufweist, zu detektieren. Dies bewirkt eine einfache Anordnung der Komponenten des Sensors, um ein Übersprechen des Detektors zu vermeiden.

Das Prisma weist bei vorteilhaften Ausgestaltungen des Sensors PMMA und/oder ein Polycarbonat auf, wobei das Prisma insbesondere aus PMMA und/oder einem Polycarbonat besteht. PMMA zeichnet sich durch einen vergleichsweise hohen Transmissionsgrad aus. Polycarbonate weisen bei einem guten Transmissionsgrad eine hohe Formbeständigkeit auf.

Der Sensor, insbesondere das Prisma, weist bei einer bevorzugten Variante wenigstens eine optische Fläche und wenigstens eine Klebefläche auf, wobei die optische Fläche eine solche Fläche ist, die zum Transmittieren von elektromagnetischen Strahlen aus dem Sender ausgebildet ist. Durch die Klebeflächen kann der Sensor vorteilhaft durch Ankleben auf einfache und stabile Weise an äußeren Objekten befestigt werden. Bevorzugt sind die Klebeflächen dazu ausgebildet, an der Abdeckung befestigt zu werden.

Bei einer Weiterentwicklung der vorgenannten Variante grenzt die optische Fläche an mindestens eine, vorzugsweise mindestens zwei, Klebefläche(n) an, wobei die optische Fläche und die Klebefläche(n) bevorzugt in einer Richtung senkrecht zu der ersten Sensorachse nebeneinander angeordnet ist/sind. Dies ermöglicht eine besonders stabile Befestigung der optischen Fläche durch die beidseitigen Klebeflächen.

Bevorzugt verläuft/verlaufen die Klebefläche(n) in einem spitzen Winkel zu der optischen Fläche, sodass die Klebefläche(n) gegenüber der optischen Fläche erhaben ist/sind. Insbesondere schließen die Ebene, in der die optische Fläche verläuft und die Ebene, in der die Klebefläche(n) verläuft/verlaufen, den spitzen Winkel ein. Durch die Wahl eines geeigneten Winkels zwischen der optischen Fläche und den Klebeflächen kann auf einfache Weise bewirkt werden, dass die optische Fläche beim Ankleben des Sensors an einem äußeren Objekt bereits eine geeignete Ausrichtung zu einer erwünschten Orientierung der elektromagnetischen Strahlen aufweisen, die auf die optische Fläche treffen.

Bei einer vorteilhaften Ausgestaltung des Sensors ist die optische Fläche als die erste Prismenflanke oder die zweite Prismenflanke ausgebildet. Durch wenigstens eine Klebefläche, die in einem geeigneten Winkel zu der ersten Prismenflanke und/oder der zweiten Prismenflanke verläuft, kann vorteilhaft auf einfache Weise bewirkt werden, dass bei einem Ankleben des Sensors mit der Klebefläche die erste Prismenflanke bereits in dem Kippwinkel zu der zweiten Sensorachse ausgerichtet ist. Bevorzugt ist die Klebefläche durch ihre Ausrichtung relativ zu der jeweiligen Prismenflanke in diesem Fall parallel zu der zweiten Sensorachse orientiert.

Ein erfindungsgemäßes Sensorsystem weist einen vorgenannten Sensor und eine Abdeckung auf, wobei sich insbesondere eine Seitenfläche der Abdeckung, die dazu eingerichtet ist, durch die von dem Sender emittierten elektromagnetischen Strahlen bestrahlt zu werden, parallel zu der zweiten Sensorachse erstreckt. In einem solchen Sensorsystem ist der Detektor des Sensors besonders gut vor einem Übersprechen durch an der Abdeckung reflektierte Strahlen geschützt.

Die Abdeckung weist bei bei bevorzugten Ausführungsformen des Sensorsystems Glas, PMMA und/oder ein Polycarbonat auf, wobei die Abdeckung insbesondere aus Glas, PMMA und/oder einem Polycarbonat besteht. Das Glas kann dabei organische Glaskomponenten, insbesondere Kunststoffe wie Acrylglas, aufweisen.Bei einigen Ausführungsformen des Sensorsystems ist an der Abdeckung eine Filterschicht angeordnet, bevorzugt auf der dem Sender und/oder dem Detektor zugewandten Seite der Abdeckung. Die Filterschicht ist vorzugsweise auf der Abdeckung aufgedruckt. Insbesondere ist die Filterschicht teilweise oder vollständig undurchlässig für elektromagnetische Wellen im sichtbaren Bereich des elektromagnetischen Spektrums. Die Filterschicht ist dazu ausgebildet, für von dem Sender ausgesendete elektromagnetische Wellen durchlässig zu sein, insbesondere für elektromagnetische Wellen mit Frequenzen im Infrarotbereich.

Bei einer bevorzugten Ausgestaltung des Sensorsystems ist der Sensor durch eine Klebeverbindung an der Abdeckung befestigt. Dadurch weist das Sensorsystem vorteilhaft bei einer stabilen Positionierung und Ausrichtung des Sensors eine einfache Struktur auf.

Das Sensorsystem weist bei einer vorteilhaften Ausführungsform einen weiteren Sensor, insbesondere einen biometrischen Sensor, bevorzugt einen Fingerabdrucksensor und/oder eine facial recognition camera auf. Dies ermöglicht das Erfassen unterschiedlicher Signale durch den Sensor und den weiteren Sensor, um ein Objekt oder eine Person eindeutig zu identifizieren. Insbesondere ist der weitere Sensor dazu ausgebildet, aktiviert zu werden, wenn das Sensorsystem einen Vorgang detektiert, der eine mögliche bevorstehende Interaktion mit dem Sensorsystem anzeigt, zum Beispiel die Annäherung einer Person an das Interaktionssystem.

Eine erfindungsgemäße elektronische Interaktionsvorrichtung zum Eingeben und/oder Ausgeben von Signalen weist ein vorgenanntes Sensorsystem auf, wobei die elektronische Interaktionsvorrichtung insbesondere als ein car entertainment system, eine Zutrittskontrollvorrichtung, ein Zeiterfassungsterminal und/oder ein Anwesenheitserfassungssystem ausgebildet ist.

Bei einer Verwendung eines Prismas zum Betrieb eines vorgenannten Sensors werden Störstrahlen mittels des Prismas wenigstens teilweise an dem Detektor vorbeigelenkt, wobei die Störstrahlen erzeugt werden, indem elektromagnetische Strahlen von dem Sender in Richtung der Abdeckung ausgesendet werden und an dem Prisma und/oder der Abdeckung reflektiert werden. Durch die Verwendung des Prismas ist der Detektor besonders gut vor den Störstrahlen geschützt.

In den Rahmen der Erfindung fällt auch ein Verfahren zur Montage eines vorgenannten Sensors.

Der Sensor wird bei einer bevorzugten Ausgestaltung des Montageverfahrens durch ein Fügeverfahren an einem Halteelement befestigt.

Bei einer vorteilhaften Variante wird der Sensor durch Kleben an der Abdeckung befestigt. Durch ein Kleben des Sensors an der Abdeckung kann die Ausrichtung des Prismas, des Detektor und des Senders mit hoher Genauigkeit und Stabilität erfolgen. Bei dem Kleben können Klebeführungen verwendet werden, die zum Beispiel durch einen Formschluss ausgebildet sind.

In den Rahmen einer bevorzugten Ausgestaltung des erfindungsgemäßen Montageverfahrens fällt auch eine Ausgestaltung, bei der wenigstens eine Markierung zum Positionieren des Sensors verwendet wird, wobei die Markierung insbesondere zerstörungsfrei entfernbar, vorzugsweise abwischbar, ist. Durch die Markierung wird das richtige Positionieren des Sensors in dem Montageverfahren vereinfacht.

Bei einer vorteilhaften Variante des Montageverfahrens wird wenigstens ein Träger zum Positionieren des Sensors verwendet. Durch den Träger wird der Sensor während der Montage zusätzlich stabilisiert.

Bei einer weiteren Ausgestaltung des Montageverfahrens wird wenigstens eine Schablone zum Positionieren des Sensors verwendet. Vorteilhaft ist die Schablone zur Montage mehrerer Sensoren wiederverwendbar, um eine genaue Positionierung der jeweiligen Sensoren zu bewirken.

Bei einer bevorzugten Variante des Verfahrens wird ein Gehäuse als Führung zum Positionieren des Sensors verwendet. Das Gehäuse bzw. ein Teil des Gehäuses bewirkt eine besonders stabile Führung des Sensors zu dessen genauer Positionierung.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt schematisch eine Draufsicht auf ein Sensorsystem mit einem optischen Sensor zur störungsarmen Laufzeitmessung elektromagnetischer Strahlen;
- Fig. 2: zeigt schematisch eine Schnittansicht des Sensorsystems;
- Fig. 3: zeigt eine isometrische Ansicht eines Prismas des Sensors;
- Fig. 4: zeigt eine schematische Seitenansicht des Sensorsystems, wobei das Prisma an einer Abdeckung befestigt ist.

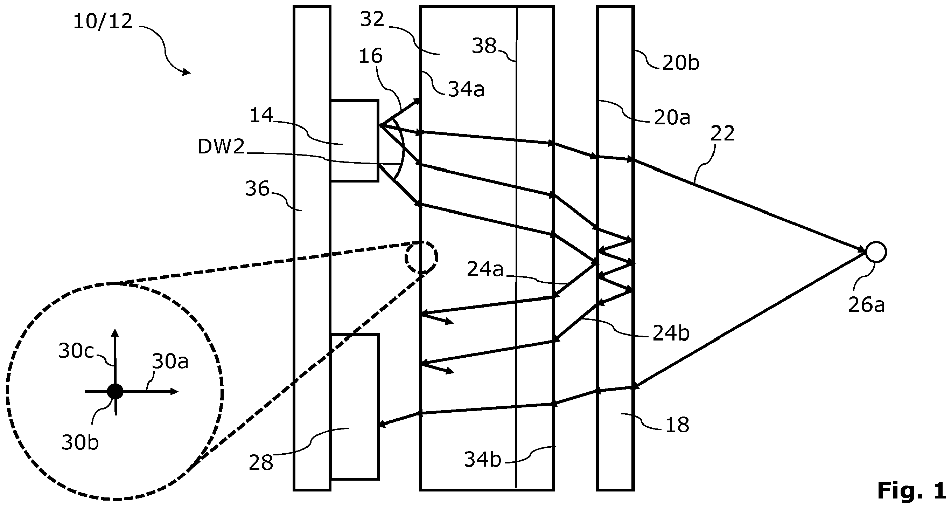

**Fig. 1** zeigt schematisch ein Sensorsystem **10** mit einem optischen Sensor **12** zur störungsarmen Laufzeitmessung elektromagnetischer Strahlung. Um die elektromagnetische Strahlung zu emittieren, weist der optische Sensor 12 einen Sender **14** auf. Die aus dem Sender 14 emittierten Strahlen **16** propagieren wenigstens teilweise zu einer Abdeckung **18**, die dem Schutz des optischen Sensors 12 dient. An der Abdeckung 18 werden die emittierten Strahlen 16 in Strahlen aufgespalten, die durch die Abdeckung 18 transmittiert werden und in Strahlen, die von Seitenflächen **20a**, **20b** der Abdeckung 18 reflektiert werden.

Die durch die Abdeckung 18 transmittierten Strahlen, die von dem Sensor 12 aus gesehen nach außen gerichtet sind, werden im Rahmen der Anmeldung insbesondere als Nutzstrahlen bezeichnet. In Fig. 1 ist beispielhaft ein Nutzstrahl **22** gezeigt. Die durch die Abdeckung 18 reflektierten Strahlen, die in das Innere des Sensors 12 gerichtet sind, werden im Rahmen der Anmeldung insbesondere als Störstrahlen bezeichnet. In Fig. 1 sind beispielhaft Störstrahlen **24a**, **24b** gezeigt.

Die Nutzstrahlen 22 werden an einem ersten Reflektor **26a** reflektiert und durch die Abdeckung 18 in den Sensor 12 zurückgestrahlt. Bei dem ersten Reflektor 26a handelt es sich insbesondere um eine sich dem Sensor 12 nähernde Person, insbesondere wenigstens Teile des Körpers einer solchen Person, bevorzugt das Gesicht einer solchen Person, wobei das Annähern der Person durch den Sensor 12 erkannt werden soll. Nach der Reflexion werden die Nutzstrahlen 22 in einem Detektor **28** des Sensors 12 detektiert. Aus der Laufzeit der Nutzstrahlen 22 auf ihrem Weg zwischen dem Sensor 12 und dem ersten Reflektor 26a kann die Distanz zwischen dem Sensor 12 und dem ersten Reflektor 26a ermittelt werden. Der Sender 14 und der Detektor 28 sind an einer Halterung **36** montiert. Die Halterung 36 gehört insbesondere zu einem Gehäuse (nicht gezeigt) des Sensors 12, wobei das Gehäuse bevorzugt auf eine Leiterplatte gelötet ist.

Die Störstrahlen 24a, 24b werden an den Seitenflächen 20a, 20b der Abdeckung 18 reflektiert und strahlen in Richtung des Detektors 28 zurück. Dadurch haben die Störstrahlen 24a, 24b eine kurze Lauftzeit und erzeugen typischerweise in dem Detektor 28 ein Rauschsignal oder ein Störsignal, welches die Genauigkeit der Laufzeitmessung der an dem ersten Reflektor 26a reflektierten Strahlen 22 verschlechtert oder die Laufzeitmessung vollständig verhindert. Das Phänomen der Überlagerung der Nutzstrahlen 22 mit den Störstrahlen 24a, 24b in dem Detektor 28 wird auch als Übersprechen des Detektors 28 bezeichnet. Erfindungsgemäß soll ein solches Übersprechen verhindert oder zumindest signifikant verringert werden.

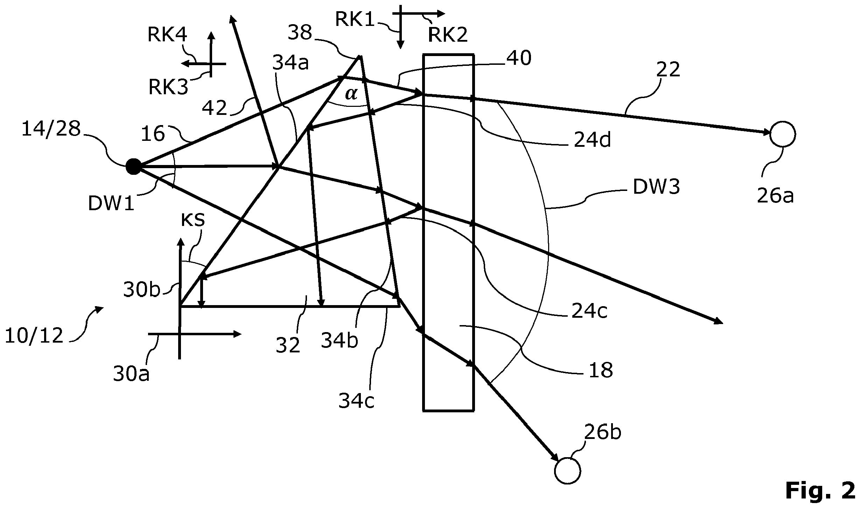

Im weiteren Text wird die Struktur des Sensorsystems 10 anhand dreier Sensorachsen beschrieben. Die erste Sensorachse **30a** erstreckt sich in einer Richtung von dem Detektor 28 zu der Abdeckung 18, wobei die erste Sensorachse 30a orthogonal zu der Abdeckung 18 steht. Die zweite Sensorachse 30b (vgl. Fig. 2, in der Fig. 1 als Punkt dargestellt) verläuft orthogonal zu der ersten Sensorachse 30a. Eine dritte Sensorachse **30c** verläuft in einer Richtung von dem Detektor 28 zu dem Sender 14, wobei die dritte Sensorachse 30c orthogonal zu der zweiten Sensorachse 30b und orthogonal zu der ersten Sensorachse 30a steht.

Der Sender 14 sendet Strahlen 16 in einer ersten Strahlebene, die durch die erste Sensorachse 30a und zweite Sensorachse 30b festgelegt ist, mit einem ersten Divergenzwinkel **DW1** aus, siehe Fig. 2. Entsprechend emittiert der Sender 14 in einer zweiten Strahlebene, die durch die erste Sensorachse 30a und dritte Sensorachse 30c festgelegt ist (und somit orthogonal zu der ersten Strahlebene steht) Strahlen 16 mit einem zweiten Divergenzwinkel **DW2**, siehe Fig. 1. Typischerweise weist der zweite Divergenzwinkel DW2 eine Winkelgröße von etwa 45° auf. In Fig. 1 ist der zweite Divergenzwinkel DW2 zur besseren Darstellung der Strahlverläufe mit einer größeren Winkelgröße dargestellt.

In Richtung der ersten Sensorachse 30a zwischen dem Detektor 28 und dem Sender 14 einerseits und der Abdeckung 18 andererseits ist parallel zu der dritten Sensorachse 30c ein Prisma **32** angeordnet. Eine erste Flanke **34a** des Prismas 32 ist dem Detektor 28 und dem Sender 14 zugewandt. Eine der ersten Flanke 34a in Richtung der ersten Sensorachse 30a gegenüberliegende zweite Flanke **34b** des Prismas 32 ist der Abdeckung 18 zugewandt.

Insbesondere weist die erste Flanke 34a des Prismas 32 einen geringeren Abstand zu dem Detektor 28 und dem Sender 14 auf als die zweite Flanke 34b des Prismas 32, wohingegen die zweite Flanke 34b des Prismas 32 näher an der Abdeckung 18 angordnet ist als die erste Flanke 34a des Prismas 32. Das Prisma 32 ist derart eingerichtet (vgl. Fig. 2), dass die Störstrahlen 24a, 24b an dem Detektor 28 vorbeigelenkt werden. Insbesondere erfahren die Störstrahlen 24a, 24b an der ersten Flanke 34a des Prismas 32 eine Totalreflexion, sodass die Störstrahlen 24a, 24b nicht mehr zu dem Detektor 28 propagieren. In der Fig. 1 ist auch eine Prismenkante **38** (vgl. Fig. 2) dargestellt, die in der Draufsicht zwischen den Prismenflanken 34a, 34b angeordnet ist und parallel zu den Prismenflanken 34a, 34b verläuft.

**Fig. 2** zeigt eine Schnittansicht des Sensorsystems 10 entlang der ersten und zweiten Sensorachse 30a, 30b. Das Prisma 32 weist eine Gestalt in Form eines Dreiecks mit der ersten Prismenflanke 34a, die dem Sender 14 und dem Detektor 28 zugewandt ist, der zweiten Prismenflanke 34b, die der Abdeckung 18 zugewandt ist, und einer dritten Prismenflanke **34c** auf, die angrenzend an die erste und zweite Prismenflanke 30a, 30b ausgebildet ist.

Dabei ist die erste Prismenflanke 34a mit einem Kippwinkel **κs** in Bezug auf die zweite Sensorachse 30b geneigt. Zwischen der ersten Prismenflanke 34a und der zweiten Prismenflanke 34b ist ein Prismenwinkel **α** ausgebildet. Die dritte Prismenflanke 34c ist vorzugsweise derart ausgerichtet, dass sich eine Mittellinie (nicht gezeigt) des Profils der dritten Prismenflanke 34c parallel zu der ersten Sensorachse 30a erstreckt. Die dritte Prismenflanke 34c liegt gegenüber der Prismenkante 38, an der der Prismenwinkel α ausgebildet ist.

Der Sender 14 sendet Strahlen 16 in der ersten Strahlebene, die durch die erste Sensorachse 30a und zweite Sensorachse 30b festgelegt ist, mit dem ersten Divergenzwinkel DW1 aus. In der gezeigten Ausführungsform ist der Kippwinkel εcs = 37° und der Prismenwinkel α = 45°. Bei diesen Winkelgrößen des Kippwinkels εcs und des Prismenwinkels α werden die von dem Sender 14 ausgesendeten Strahlen 16 durch das Prisma 32 derart gebrochen, dass die Ausbreitungsrichtung von durch das Prisma 32 transmittierten Strahlen **40** nach dem Austritt aus dem Prisma 32 eine erste Richtungskomponente **RK1** in einer Richtung von der Prismenkante 38 zu der dritten Prismenflanke 34c parallel oder antiparallel zu der zweiten Sensorachse 30b aufweist. Die erste Richtungskomponente RK1 ist bei der in der Fig. 2 gezeigten Ausrichtung der zweiten Sensorachse 30b insbesondere antiparallel zu der zweiten Sensorachse 30b ausgerichtet. Eine zweite Richtungskomponente **RK2** der Ausbreitungsrichtung ist parallel oder antiparallel zu der ersten Sensorachse 30a ausgerichtet. Die zweite Richtungskomponente RK2 ist bei der in der Fig. 2 gezeigten Ausrichtung der ersten Sensorachse 30a insbesondere parallel zu der ersten Sensorachse 30a ausgerichtet. Das Prisma 32 bewirkt somit ein Verschwenken des durch die Nutzstrahlen 22 ausgeleuchteteten Raumwinkels in der Richtung der ersten Richtungskomponente RK1 im Vergleich zu dem Fall, dass das gezeigte Prisma 32 in dem optischen Sensor 12 nicht verwendet wird.

Dadurch kann mit dem ersten Reflektor 26a gleichzeitig ein zweiter Reflektor **26b** durch die Nutzstrahlen 22 bestrahlt werden, der gegenüber dem ersten Reflektor 26a in Richtung der ersten Richtungskomponente RK1 versetzt ist. Bei dem zweiten Reflektor 26b handelt es sich insbesondere um einen sich dem Sensor 12 nähernden Finger einer Person, wobei ein Fingerabdruck-Sensor (nicht gezeigt) durch ein Signal des optischen Sensors 12 in Bezug auf den sich nähernden Finger aktiviert werden soll.

Die Nutzstrahlen 22 treten auf der dem Prisma gegenüberliegenden Seite der Abdeckung 18 aus der Abdeckung 18 aus, um die Reflektoren 26a, 26b zu bestrahlen. Der Prismenwinkel α und der Kippwinkel εcs sind derartig ausgebildet, dass die Nutzstrahlen 22 nach dem Austreten aus der Abdeckung 18 an der Oberfläche der Abdeckung 18 in der ersten Strahlebene einen dritten Divergenzwinkel **DW3** aufweisen, der mit dem ersten Divergenzwinkel DW1 übereinstimmt. Dadurch wird verhindert, dass die elektromagnetischen Strahlen durch eine zu hohe Strahlungsleistung Schaden in der Umgebung des optischen Sensors 12 anrichten. Es wird auch verhindert, dass die Strahlungsleistung des Sensors 12 durch das Prisma 32 stark vermindert wird. Die Nutzstrahlen 22 werden von den Reflektoren 26a, 26b in Richtung des optischen Sensors 12 reflektiert (vgl. Fig. 1), um dort von dem Detektor 28 zur Abstands- bzw. Positionsbestimmung der Reflektoren 26a, 26b erfasst zu werden.

Besonders bevorzugt wird das Detektieren eines Annäherns des Reflektors 26a genutzt, um einen Ruhe- bzw. Energiesparmodus des Sensors 12 zu beenden und/oder das Detektieren eines Annäherns des Reflektors 26b wird genutzt, um die Signifikanz von Daten, die von einem Fingerabdrucksensor oder einem anderen Sensor (nicht gezeigt) erhalten werden, zu erhöhen.

Die in der Fig. 2 gezeigten Störstrahlen **24c, 24d** werden durch Reflexion der von dem Sender 14 emittierten Strahlen 16 an der Abdeckung 18 erzeugt. In der gezeigten Ausführungsform, insbesondere bei der vorgenannen Wahl des Kippwinkels εcs und des Prismenwinkels α, erfahren die Störstrahlen 24c, 24d an der ersten Prismenflanke 34a eine Totalreflexion, sodass sie nicht auf den Sender 14 einstrahlen. Entsprechend propagieren die Störstrahlen 24c, 24d auch nicht zu dem Detektor 28 (vgl. Fig. 1).

An der ersten Prismenflanke 34a werden von dem Sender 14 emittierte Strahlen 16 teilweise reflektiert. Die Ausbreitungsrichtung der an der ersten Prismenflanke 34a reflektierten weiteren Störstrahlen **42** weisen eine dritte Richtungskomponente **RK3** auf, die in der Richtung von der dritten Prismenflanke 34c zu der Prismenkante 38 parallel oder antiparallel zu der zweiten Sensorachse 30b orientiert ist. Die dritte Richtungskomponente RK3 ist bei der in der Fig. 2 gezeigten Ausrichtung der zweiten Sensorachse 30b insbesondere parallel zu der zweiten Sensorachse 30b ausgerichtet. Außerdem weist die Ausbreitungsrichtung der an der ersten Prismenflanke 34a reflektierten Strahlen 42 eine vierte Richtungskomponente **RK4** auf, die in Richtung von der Abdeckung 18 zu dem Sender 14 parallel oder antiparallel zu der ersten Sensorachse 30a orientiert ist. Die vierte Richtungskomponente RK4 ist bei der in der Fig. 2 gezeigten Ausrichtung der ersten Sensorachse 30a insbesondere antiparallel zu der ersten Sensorachse 30a ausgerichtet. Die dritte Richtungskomponente RK3 ist bei dem Kippwinkel εcs und dem Prismenwinkel α bei der gezeigten Ausführungsform des Prismas 32 ausreichend groß, dass Abstände zwischen dem Prisma 32 und dem Sender 14 gewählt werden können, bei denen die an der der ersten Prismenflanke 34a reflektierten Strahlen 42 ebenfalls an dem Sender 14 (und an dem Detektor 28) vorbei propagieren.

Durch das Prisma 32 wird somit ein Rückstrahlen der von dem Sender 14 emittierten Strahlen 16 sowohl in den Sender 14 als auch in den Detektor 28 verhindert. Ein Übersprechen des Detektors 28 findet nicht statt. Durch die Störstrahlen 24c, 24d erzeugte Rauschsignale oder Störsignale, die die Genauigkeit der Abstandsmessung der Reflektoren 26a, 26b beeinträchtigen oder die Abstandsmessung verhindern, treten nicht auf.

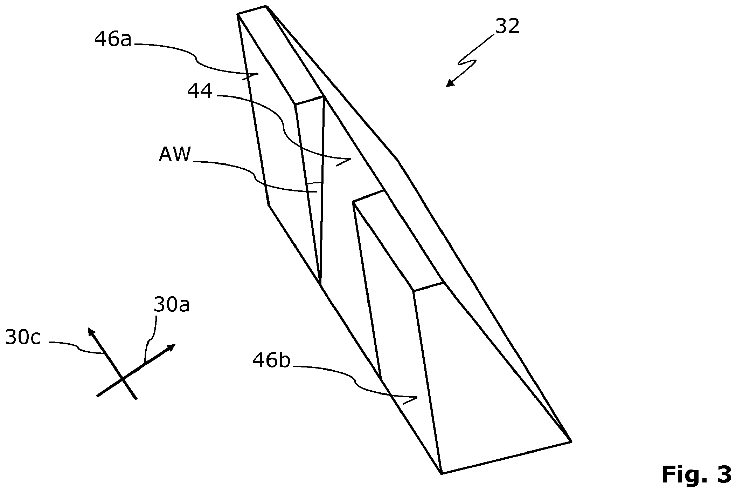

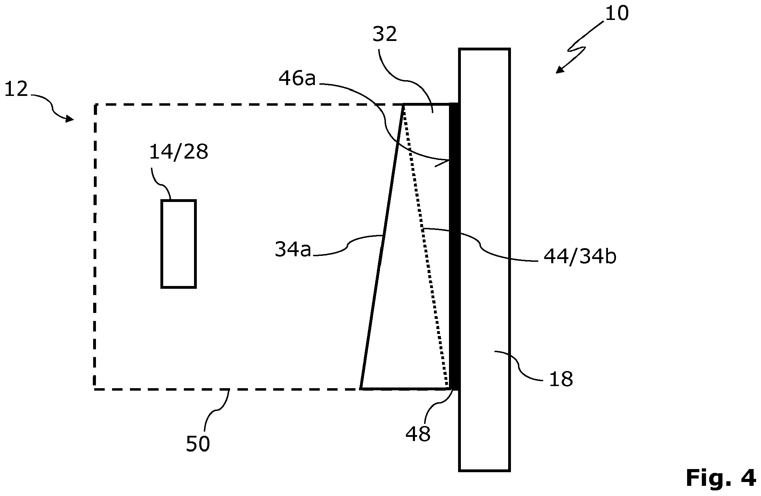

**Fig. 3** zeigt eine isometrische Ansicht des Prismas 32, wobei das Prisma 32 eine optische Fläche **44** zum Transmittieren von elektromagnetischen Strahlen 16 (vgl. Fig. 1) aufweist. An die optische Fläche 44 grenzen beidseitig zwei Klebeflächen **46a, 46b** an, auf denen z.B. Klebepads (nicht gezeigt) angebracht werden können, um damit das Prisma 32 und dadurch den gesamten Sensor 12 zu fixieren (vgl. Fig. 4). Die optische Fläche 44 und die Klebeflächen 46a, 46b sind in einer Richtung parallel zu der dritten Sensorachse 30c und damit senkrecht zu der ersten Sensorachse 30a nebeneinander angeordnet. Die Klebeflächen 46a, 46b sind dabei in einem spitzen Ausrichtungswinkel AW zu der optische Fläche 44 ausgerichtet, sodass die Klebeflächen 46a, 46b von der optischen Fläche 44 abstehen. Insbesondere schließen die Ebene, in der die optische Fläche 44 verläuft und die Ebene, in der die Klebeflächen 46a, 46b verlaufen, den spitzen Ausrichtungswinkel AW ein. Die optische Fläche 44 ist bevorzugt als die erste Prismenflanke 34a oder die zweite Prismenflanke 34b (vgl. Fig. 2) ausgebildet.

**Fig. 4** zeigt schematisch eine Seitenansicht eines Sensorsystems 10 mit dem Sensor 12, wobei das Prisma 32 mit den Klebeflächen 46a, 46b (vgl. Fig. 3) durch eine Klebeverbindung **48**, insbesondere Klebepads, an der Abdeckung 18 angeklebt ist. In der Fig. 4 ist die Klebefläche 46a gezeigt. Die optische Fläche 44 zwischen den Klebeflächen 46a, 46b ist in der Fig. 4 als gepunktete Linie dargestellt. Dabei ist die optische Fläche 44 bei der in der Fig. 4 gezeigten Ausführungsform des Sensorsystems als die zweite Prismenflanke 34b ausgebildet, die der ersten Prismenflanke 34a gegenüberliegt. Der Sensor 12 umfasst neben dem Sender 14 und Detektor 28 auch ein Gehäuse **50**, welches in der Fig. 4 gestrichelt gezeigt ist.

Unter Vornahme einer Zusammenschau aller Figuren der Zeichnung betrifft die Erfindung einen optischen Sensor 12 mit einem Prisma 32, das zwischen einem Detektor 28 des Sensors 12 und einer Abdeckung 18 positioniert ist. Eine von dem Prisma 32 ausgehend nach außen gerichtete Flächennormale einer ersten Prismenflanke 34a des Prismas 32 weist in Richtung des Detektors 28. Eine von dem Prisma 32 ausgehend nach außen gerichtete Flächennormale einer zweiten Prismenflanke 34b des Prismas 32 weist in Richtung der Abdeckung 18. Schenkel eines Prismenwinkels α erstrecken sich an der ersten und der zweiten Prismenflanke 34a, 34b entlang. Eine erste Sensorachse 30a verläuft in einer Richtung durch den Detektor 28 und die Abdeckung 18, wobei die erste Sensorachse 30a orthogonal zu der Abdeckung 18 ausgerichtet ist. Eine zweite Sensorachse 30b steht orthogonal zu der ersten Sensorachse 30a, wobei sich die Abdeckung 18 insbesondere mit ihrer längsten Ausdehnung entlang der zweiten Sensorachse 30b erstreckt. Die erste Prismenflanke 34a ist gegen die zweite Sensorachse 30b mit einem Kippwinkel εcs schräg orientiert. Die Abdeckung 18 transmittiert wenigstens einen Teil von elektromagnetischen Strahlen 16, die von einem Sender 14 des Sensors 12 emittiert werden. Der Detektor 28 ist zum Detektieren der von dem Sender 14 emittierten Strahlen 16 ausgebildet. Der Kippwinkel εcs und der Prismenwinkel α weisen derartige Winkelgrößen auf, dass Störstrahlen 24a - 24d wenigstens teilweise an dem Detektor 28 vorbei propagieren, wobei die Störstrahlen 24a - 24d durch Reflexion von aus dem Sender 14 emittierten Strahlen 16 an der Abdeckung 18 erzeugt werden.

### Bezugszeichenliste

- 10: Sensorsystem
- 12: Sensor
- 14: Sender
- 16: emittierte Strahlen
- 18: Abdeckung
- 20a, 20b: Seitenflächen der Abdeckung
- 22: Nutzstrahlen
- 24a - 24d: Störstrahlen
- 26a, 26b: Reflektoren
- 28: Detektor
- 30a - 30c: Sensorachsen
- 32: Prisma
- 34a - 34c: Flanken des Prismas
- 36: Halterung
- 38: Prismenkante
- 40: transmittierte Strahlen
- 42: weitere Störstrahlen
- 44: optische Fläche
- 46a, 46b: Klebeflächen
- 48: Klebeverbindung
- 50: Gehäuse

- RK1 - RK4: Richtungskomponenten von Ausbreitungsrichtungen der Strahlen
- AW: Ausrichtungswinkel

## Patentansprüche

1. Optischer Sensor (12) zur störungsarmen Laufzeitmessung von reflektierten elektromagnetischen Strahlen (16), aufweisend:
- Einen Sender (14) zum Senden der elektromagnetischen Strahlen (16) durch eine Abdeckung (18), wobei die Abdeckung (18) für wenigstens einen Teil der von dem Sender (14) emittierten Strahlen (16) durchlässig ist;
- Einen Detektor (28) zum Detektieren der elektromagnetischen Strahlen (16);
- Eine erste Sensorachse (30a), die in einer Richtung von dem Detektor (28) zu der Abdeckung (18) verläuft, wobei die erste Sensorachse (30a) orthogonal auf der Abdeckung (18) steht;
- Eine zweite Sensorachse (30b), die orthogonal zu der ersten Sensorachse (30a) steht; wobei
zwischen dem Detektor (28) und der Abdeckung (18) ein Prisma (32) angeordnet ist, wobei das Prisma (32) eine dem Detektor (28) zugewandte erste Prismenflanke (34a) aufweist, wobei die erste Prismenflanke (34a) in Bezug auf die zweite Sensorachse (30b) mit einem Kippwinkel (κs) geneigt ist,
wobei das Prisma (32) eine an die erste Prismenflanke (34a) angrenzende zweite Prismenflanke (34b) aufweist, die der Abdeckung (18) zugewandt ist, wobei zwischen der ersten Prismenflanke (34a) und der zweiten Prismenflanke (34b) ein Prismenwinkel (α) ausgebildet ist,
wobei eine dritte Prismenflanke (34c) an die erste Prismenflanke (34a) und die zweite Prismenflanke (34b) angrenzt,
wobei der Prismenwinkel (α) und der Kippwinkel (κs) derart ausgebildet sind, dass Störstrahlen (24a - 24d, 42) wenigstens teilweise mittels des Prismas (32) an dem Detektor (28) vorbeigelenkt werden, wobei die Störstrahlen (24a - 24d, 42) erzeugt werden, indem elektromagnetische Strahlen (16) von dem Sender (14) in Richtung der Abdeckung (18) ausgesendet werden und an dem Prisma (32) und/oder der Abdeckung (18) reflektiert werden.

2. Sensor nach Anspruch 1, wobei das Prisma (32) in Richtung der ersten Sensorachse (30a) zwischen dem Detektor (28), dem Sender (14) und der Abdeckung (18) angeordnet ist, wobei die erste Prismenflanke (34a) dem Detektor (28) und dem Sender (14) zugewandt ist.

3. Sensor nach einem der vorhergehenden Ansprüche, wobei die dritte Prismenflanke (34c) eine vorbestimmte Rauheit aufweist, um Reflexionen von elektromagnetischer Strahlung an der dritten Prismenflanke (34c) zu verringern.

4. Sensor nach einem der vorhergehenden Ansprüche, wobei der Sender (14) dazu eingerichtet ist, elektromagnetische Strahlen (16) in einer ersten Strahlebene, die durch die erste Sensorachse (30a) und die zweite Sensorachse (30b) festgelegt ist, mit einem ersten Divergenzwinkel (DW1) mit 40° ≤ DW1 ≤ 50° auszusenden, bevorzugt DW1=45°, wobei die erste Sensorachse (30a) durch den Scheitelpunkt des ersten Divergenzwinkels (DW1) und zwischen den Schenkeln des ersten Divergenzwinkels (DW1) verläuft, wobei die erste Sensorachse (30a) insbesondere eine Winkelhalbierende des ersten Divergenzwinkels (DW1) bildet.

5. Sensor nach Anspruch 4, wobei der Sender (14) dazu eingerichtet ist, elektromagnetische Strahlung in einer zweiten Strahlebene, die orthogonal zu der ersten Strahlebene steht, mit einem zweiten Divergenzwinkel (DW2) mit 40° ≤ DW2 ≤ 50°, bevorzugt DW2= 45°, auszusenden, wobei die erste Sensorachse (30a) durch die zweite Strahlebene verläuft.

6. Sensor nach einem der vorhergehenden Ansprüche, wobei das Prisma (32) dazu eingerichtet ist, die von dem Sender (14) emittierten Strahlen (16) in eine Bestrahlungsrichtung zu brechen, die eine erste Richtungskomponente (RK1) parallel zu der zweiten Sensorachse (30b) aufweist, wobei die erste Richtungskomponente (RK1) von einer Prismenkante (38), die der dritten Prismenflanke (34c) gegenüberliegt, zu der dritten Prismenflanke (34c) gerichtet ist, wobei eine zweite Richtungskomponente (RK2) der Bestrahlungsrichtung parallel zu der ersten Sensorachse (30a) gerichtet ist.

7. Sensor nach einem der vorhergehenden Ansprüche und Anspruch 4, wobei das Prisma (32) dazu eingerichtet ist, die von dem Sender (14) emittierten Strahlen (16) derart zu brechen, dass aus den emittierten Strahlen (16) abgezweigte Nutzstrahlen (22) nach dem Austreten aus der Abdeckung (18) in der ersten Strahlebene einen dritten Divergenzwinkel (DW3) aufweisen, dessen Winkelgröße mit der Winkelgröße des ersten Divergenzwinkels (DW1) übereinstimmt.

8. Sensor nach einem der vorhergehenden Ansprüche, wobei für den Kippwinkel (κs) gilt: 30° ≤ κs ≤ 40° , insbesondere εcs = 37°, und/oder für den Prismenwinkel (α) gilt: 40° ≤ α ≤ 50°, insbesondere α = 45°.

9. Sensor nach einem der vorhergehenden Ansprüche, wobei der Sender (14) und der Detektor (28) in einer Richtung parallel zu einer dritten Sensorachse (30c) nebeneinander angeordnet sind, wobei die dritte Sensorachse (30c) orthogonal zu der ersten Sensorachse (30a) und der zweiten Sensorachse (30b) verläuft, wobei insbesondere der Sender (14) dazu ausgerichtet ist, elektromagnetische Strahlen (16) mit einer Strahlrichtung, die eine Richtungskomponente senkrecht zu der dritten Sensorachse (30c) aufweist, zu emittieren und der Detektor (28) dazu ausgerichtet ist, elektromagnetische Strahlen (16) mit einer Strahlrichtung, die eine Richtungskomponente senkrecht zu der dritten Sensorachse (30c) aufweist, zu detektieren.

10. Sensor nach einem der vorhergehenden Ansprüche, wobei das Prisma (32) PMMA und/oder ein Polycarbonat aufweist, vorzugsweise aus PMMA und/oder einem Polycarbonat besteht.

11. Sensor nach einem der vorhergehenden Ansprüche, wobei der Sensor (12), insbesondere das Prisma (32), wenigstens eine optische Fläche (44) und wenigstens eine Klebefläche (46a, 46b) aufweist, wobei die optische Fläche (44) zum Transmittieren von elektromagnetischen Strahlen (16) ausgebildet ist; optional wobei wobei die optische Fläche (44) an mindestens eine, vorzugsweise mindestens zwei, Klebefläche(n) (46a, 46b) angrenzt, wobei die optische Fläche (44) und die Klebefläche(n) (46a, 46b) bevorzugt in einer Richtung senkrecht zu der ersten Sensorachse (30a) nebeneinander angeordnet ist/sind.

12. Sensor nach Anspruch 11, wobei die optische Fläche als die erste Prismenflanke (34a) oder die zweite Prismenflanke (34b) ausgebildet ist.

13. Sensorsystem (10), aufweisend einen Sensor (12) nach einem der vorhergehenden Ansprüche und eine Abdeckung (18), wobei sich insbesondere eine Seitenfläche (20a) der Abdeckung (18), die dazu eingerichtet ist, durch die von dem Sender (14) emittierten elektromagnetischen Strahlen (16) bestrahlt zu werden, parallel zu der zweiten Sensorachse (30b) erstreckt.

14. Sensorsystem nach Anspruch 13 mit einem Sensor (12), vorzugsweise nach einem der Ansprüche 11 oder 12, wobei der Sensor (12) durch eine Klebeverbindung (48) an der Abdeckung (18) befestigt ist.

15. Sensorsystem nach einem der Ansprüche 13 oder 14, wobei das Sensorsystem einen weiteren Sensor, insbesondere einen biometrischen Sensor, bevorzugt einen Fingerabdrucksensor und/oder eine facial recognition camera aufweist.

16. Elektronische Interaktionsvorrichtung zum Eingeben und/oder Ausgeben von Signalen, aufweisend ein Sensorsystem nach einem der Ansprüche 13 bis 15, wobei die elektronische Interaktionsvorrichtung insbesondere als ein car entertainment system, eine Zutrittskontrollvorrichtung, ein Zeiterfassungsterminal und/oder ein Anwesenheitserfassungssystem ausgebildet ist.

17. Verwendung eines Prismas (32) zum Betrieb eines Sensors (12) gemäß einem der Ansprüche 1 bis 15, wobei Störstrahlen (24a - 24d, 42) wenigstens teilweise mittels des Prismas (32) an dem Detektor (28) vorbeigelenkt werden, wobei die Störstrahlen (24a - 24d, 42) erzeugt werden, indem elektromagnetische Strahlen (16) von dem Sender (14) in Richtung der Abdeckung (18) ausgesendet werden und an dem Prisma (32) und/oder der Abdeckung (18) reflektiert werden.
